# EUROPÄISCHE PATENTSCHRIFT

(11) **EP 0 438 579 B1**
(45) Veröffentlichungstag und Bekanntmachung des Hinweises auf die Patenterteilung: **25.10.1995**
(21) Anmeldenummer: 90913177.3
(22) Anmeldetag: 01.08.1990
(51) Int. Cl.: C08G 63/48, C08G 63/685, C08G 69/44, C08G 69/26, C08G 18/36, C08G 18/38

(54) **NEUARTIGE MONOMERBAUSTEINE AUS HYDROXYFETTSÄUREN ZUR HERSTELLUNG VON KUNSTSTOFFEN**
NEW MONOMERIC UNITS OBTAINED FROM HYDROXY FATTY ACIDS, FOR MANUFACTURING PLASTICS
NOUVELLES UNITES MONOMERES OBTENUES A PARTIR D'ACIDES GRAS D'HYDROXY, POUR FABRIQUER DES PLASTIQUES

(30) Priorität: 09.08.1989 DE 3926286
(43) Veröffentlichungstag der Anmeldung: 31.07.1991
(73) Patentinhaber: Dr. Frische GmbH, D-63755 Alzenau (DE)
(72) Erfinder: FRISCHE, Rainer, D-6000 Frankfurt am Main (DE); VOLKHEIMER, Jürgen, D-6200 Wiesbaden (DE)
(74) Vertreter: Reichel, Wolfgang, Dipl.-Ing.
(86) Internationale Anmeldenummer: EP9001260
(87) Internationale Veröffentlichungsnummer: WO9102016

(56) Entgegenhaltungen:
- DE-A- 1 495 251
- FR-A- 2 555 186
- GB-A- 2 144 441
- US-A- 4 535 142

## Beschreibung

Die vorliegende Erfindung bezieht sich auf eine neuartige Gruppe von Monomeren, die auf der Grundlage von Hydroxyfettsäuren oder Aminofettsäuren, wie sie aus Fetten und Ölen gewonnen werden können, hergestellt werden, und die zur Bildung von Polymeren geeignet sind.

Natürliche Öle und Fette dienen nicht nur als Rohstoffe zur Gewinnung einer Vielzahl technisch wichtiger Grundstoffe, sie können unter bestimmten Voraussetzungen und in bisher sehr beschränktem Maß auch als Ausgangsmaterial zur Herstellung von Polymeren, insbesondere von Kunststoffen, verwendet werden. Vor dem Hintergrund der sich abzeichnenden sozioökonomischen Veränderungen (insbesondere erhöhter Aufwendungen für Umweltschutz und Agrarüberschußproduktion), ist damit zu rechnen, daß natürlichen Fetten und Ölen als sogenannten nachwachsenden Rohstoffen in Zukunft eine wesentlich stärkere industrielle Bedeutung zukommen wird als bisher.

Die in natürlichen Fetten und Ölen vorkommenden Hydroxyfettsäuren und ihre Derivate, bzw. die aus reaktiven Fettsäuren (z.B. Ölsäure, Linolsäure) herstellbaren Hydroxyfettsäuren oder Aminofettsäuren, sind für die Erzeugung von technisch nutzbaren Produkten, insbesondere von Polymeren und Kunststoffen, besonders geeignet. So ist es beispielsweise möglich, Öle und Fette, die aufgrund ihrer Zusammensetzung in überwiegendem Maße zwei oder mehr Alkoholgruppen pro Triglyceridmolekül enthalten, durch Umsetzung mit entsprechenden reaktiven Verbindungen, z.B. mit Diisocyanaten, zu polymeren Strukturen umzusetzen. Für derartige Umsetzungen sind z.B. Ricinusöl oder hydriertes Ricinusöl, die direkt als Triglyceride eingesetzt werden können, geeignet.

Die Anwendungsbreite dieser Methode wird jedoch nicht nur durch die zur Verfügung stehenden Öle und Fette begrenzt, von ganz besonderem Nachteil ist es vielmehr, daß die direkte Verwendung von Triglyceriden hauptsächlich zur Bildung vernetzter und damit thermoplastisch nicht mehr verarbeitbarer Polymere führt. Die Herstellung linear aufgebauter polymerer Kunststoffe aus uneinheitlichen, von natürlichen Fetten abgeleiteten monomeren und oligomeren Bausteine ist in FR-A-2 555 186 beschrieben. Über den Weg der Isolierung chemisch reiner Fettsäuren und der Herstellung geeigneter Hydroxy- oder Aminofettsäurederivate wäre es möglich, ein breites Spektrum von Kunststoffen zu erschließen. Die Reindarstellung von chemisch einheitlichen Fettsäuren und ihren Derivaten aus nativen Triglyceriden stellt jedoch sowohl unter technischen Gesichtspunkten als auch aus Kostengründen ein entscheidendes Problem der Oleochemie dar. Dies gilt sogar für Triglyceride, in denen eine Fettsäure extreme Dominanz aufweist. Aus diesem Grund kommen selbst so bedeutsame Fettsäuren wie die Ricinolsäure, die bei der Herstellung von technischen Hilfsstoffen, Seifen und Schmiermitteln eingesetzt wird, auf technischem Sektor nur in angereicherter, nicht jedoch in chemisch reiner Form zur Anwendung.

Aufgabe der vorliegenden Erfindung war es daher, Hydroxyfettsäuren und Aminofettsäuren aus Fettsäuregemischen, wie sie insbesondere aus natürlichen Fetten und Ölen erhältlich sind, in reiner Form zu gewinnen und weiter in einer Form zur Verfügung zu stellen, die sie für eine weitere Umsetzung zu Polymeren geeignet macht.

Gegenstand der vorliegenden Erfindung sind demnach zur Erzeugung polymerer Kunststoffe geeignete Monomere, die wie in Anspruch 4 beschrieben gekennzeichnet sind, bzw. ihre Verwendung zur Herstellung von Kunststoffen, oder zur Reindarstellung von Fettsäuren

Zur Herstellung der erfindungsgemäßen Monomeren geht man von den Estern hydroxyl- oder aminogruppenhaltiger Fettsäuren aus, wobei die Kettenlängen der Fettsäurereste vorzugsweise 10 bis 24 Kohlenstoffatome betragen. Zweckmäßig werden die Methyl- oder Ethylester dieser Fettsäuren eingesetzt, die sich aus den nativen Fetten und Ölen in bekannter Weise durch Umesterung mit den entsprechenden Alkoholen erhalten lassen. Im Falle von aminogruppenhaltigen Fettsäuren können auch die entsprechenden Salze eingesetzt werden. Als hydroxylgruppenhaltige Fettsäureester verwendet man besonders vorteilhaft die Ester der Ricinolsäure und der 12-Hydroxystearinsäure, also der Säuren, die in Ricinusöl bzw. hydriertem Ricinusöl eine starke Dominanz aufweisen. Das Spektrum verfügbarer Hydroxyfettsäuren wird dadurch erweitert, daß man Fette und Öle mit einem besonders hohen Gehalt an ungesättigten Fettsäuren wie Ölsäure, Linolsäure oder Linolensäure oxidiert, wobei die Reaktionsbedingungen zweckmäßig so eingestellt werden, daß bevorzugt die Monohydroxy-Derivate der entsprechenden Säuren entstehen. Dies läßt sich z.B. bei der Oxidation ungesättigter Fettsäuren mittels Perameisensäure oder Peressigsäure dadurch erreichen, daß man bei hinreichend niedrigen Temperaturen, beispielsweise zwischen -5 und +20°C, arbeitet und die Verweilzeiten kurz hält, so daß sich zunächst die Epoxide bilden. Diese Epoxidverbindungen lassen sich dann durch reduktive Ringöffnung in Fettsäureprodukte mit isolierten Hydroxylgruppen überführen. So bildet sich aus 9,10-Stearinsäureepoxid entweder die 9- oder die 10-Hydroxystearinsäure. Die Oxidation der Fettsäuren muß hierbei nicht unbedingt bereits in den Triglyceriden erfolgen, sondern kann auch nach der Umesterung stattfinden.

Aminogruppenhaltige Fettsäurereste erhält man nach den gängigen Methoden der Chemie ebenfalls aus ungesättigten Fettsäureestern, beispielsweise durch Addition von Halogenwasserstoff, z.B. HBr an die Doppelbindung und anschließende nucleophile Substitution des Halogenids durch Ammoniak.

Die Ester der Hydroxy- bzw. Aminofettsäuren werden direkt mit geeigneten bifunktionellen Verbindungen, die zur Reaktion mit Hydroxyl- oder Aminogruppen in der Lage sind, umgesetzt. Erfindungsgemäß können sowohl Ester eines Hydroxy- oder Aminofettsäuretyps wie auch Gemische von Estern verschiedener Hydroxy- oder Aminofettsäuren eingesetzt werden. Bei diesen Reaktionen werden jeweils zwei Fettsäureester mittels der bifunktionellen Verbindung über ihre Hydroxyl- bzw Aminogruppen in den Fettsäureresten miteinander verknüpft. In solchen Dimeren liegen die Fettsäureester somit in einer "Schwanz-Schwanz" Anordnung vor und die Esterfunktionen stehen als "Kopfgruppen" für eine weitere Umsetzung zur Verfügung.

Zur Verknüpfung der Fettsäureester geeignete bifunktionelle Verbindungen sind beispielsweise die Diisocyanate, die unter Bildung von Urethanen bzw. im Falle von aminogruppenhaltigen Fettsäureresten von Harnstoffderivaten reagieren. Verwendung finden in erster Linie die in der Kunststoffherstellung gängigen Diisocyanate, insbesondere Hexamethylendiisocyanat, Methylendiphenylendiisocyanat (MDI) oder Diisocyanate der Desmodur-Klasse wie Desmodur® T80. Andere zur Umsetzung geeignete bifunktionelle Verbindungen sind aktivierte Dicarbonsäurederivate, z.B. Säuredichloride, Ester oder Anhydride, Thiosäuren oder Diketene, durch die die im Ausgangsgemisch vorliegenden Hydroxy- oder Aminofettsäureester über zwei weitere Ester- bzw. Amidbindungen miteinander verknüpft werden. Bevorzugt werden hier Phthalsäuredichlorid, Adipinsäuredichlorid, Maleinsäuredichlorid oder Phosgen eingesetzt.

Wider Erwarten läßt sich die schwanz-Schwanz-Verknüpfung von hydroxylgruppenhaltigen Fettsäureestern mit Diisocyanaten oder aktivierten Dicarbonsäurederivaten relativ problemlos bewirken, obwohl zu erwarten wäre, daß die sekundären Alkoholgruppen in den Fettsäureresten hierfür nicht reaktiv genug und zudem durch die langkettigen aliphatischen Reste sterisch gehindert sind. Die Reaktion verläuft ebenso vollständig, wenn sich die OH-Gruppe wie in der Ricinolsäure in Nachbarschaft zu einer Doppelbindung befindet. Auch Umesterungen, d.h. eine Übertragung der Estergruppen der Fettsäureester auf die Dicarbonsäurederivate, wie sie eigentlich zu erwarten wären, konnten nicht beobachtet werden. Erstaunlich ist ferner, daß die bifunktionellen Verbindungen nicht nur als solche sondern auch in Form von Gemischen eingesetzt werden können. So erfolgt die Verknüpfung von Fettsäureestern über die OH-Gruppen problemlos, wenn als Kopplungsreagenz Gemische von Diisocyanaten eingesetzt werden, wie sie beispielsweise unter dem Handelsnamen Desmodur® T80 erhältlich sind. Auch Mischungen von Säurechloriden unterschiedlicher Dicarbonsäuren, z.B. ein Gemisch der Säuredichloride von Malonsäure und Adipinsäure können ohne Schwierigkeiten verwendet werden.

Die Verknüpfungsreaktion kann gegebenenfalls unter Einsatz geeigneter Katalysatoren erfolgen. Bei der Umsetzung mit Diisocyanaten finden beispielsweise gängige Isocyanataktivatoren wie Dibutyldizinnlaurat Verwendung. Die Reaktion mit aktivierten Dicarbonsäurederivaten, z.B. Säurechloriden, erfolgt zweckmäßig in Anwesenheit von Pyridin, wodurch das Säurechlorid in einen aktiven Komplex überführt wird.

Um eine Verknüpfung von jeweils zwei Hydroxy- oder Aminofettsäureestern mittels der bifunktionellen Verbindung zu erreichen, ist es wichtig, daS die bifunktionelle Verbindung, bezogen auf ihre reaktiven Gruppen, nicht im stöchiometrischen Überschuß eingesetzt wird, da andernfalls auch die Monoderivate der bifunktionellen Verbindungen mit den Hydroxy- bzw. Aminofettsäureestern gebildet werden. Aus diesem Grund werden die bifunktionellen Verbindungen dem Reaktionsgemisch zweckmäßig so langsam zugesetzt, daß für jede ihrer aktiven Gruppen ausreichend Zeit zur Verfügung steht, mit jeweils einer funktionellen Gruppe eines Fettsäureesters zu reagieren.

Die Umsetzung kann gegebenenfalls auch in einem geeigneten Lösungsmittel erfolgen, um eine homogene Reaktionsführung zu gewährleisten. Als Lösungsmittel kommen insbesondere Toluol, Xylol oder Pyridin in Betracht.

Die Umsetzung wird je nach Art der eingesetzten Substanz bei Temperaturen von ungefähr 20 bis 150°C durchgeführt. Bevorzugt arbeitet man in einem Bereich zwischen 80 und 120°C bzw. bei Verwendung von Lösungsmitteln in deren Siedebereich.

Die Aufbereitung der Reaktionsprodukte erfolgt in allgemein bekannter Weise. So wird zur Isolierung der erfindungsgemäßen Diurethane, Harnstoffderivaten, Diester oder Diamide die Gesamtreaktionslösung nach Beendigung der Reaktion, gegebenenfalls nach Abziehen des Lösungsmittels, zunächst mit kaltem Wasser verdünnt, um die wasserlöslichen Bestandteile des Reaktionsgemisches zu entfernen. Reaktionsprodukte sowie nicht umgesetzte Fettsäureester scheiden sich hierbei als öl ab. Das Öl wird mit einem geeigneten Lösungsmittel, z.B. Ether, aufgenommen und die wäßrige Phase abgetrennt. Zur Entfernung von eventuell vorhandenem Pyridin aus der Etherphase kann diese mehrfach mit saurem Wasser, beispielsweise mit verdünnter Salzsäure, durchgeschüttelt und anschließend mit Natriumhydrogencarbonatlösung neutralgewaschen werden. Nach Abtrennung der Etherphase wird diese getrocknet und der Ether abgezogen. Im Rückstand verbleiben die gewünschten verknüpften Fettsäureester sowie Fettsäureester ohne funktionelle Gruppen. Der Rückstand wird dann in einem geeigneten Lösungsmittel, beispielsweise Methanol, Ethanol, Hexan, Ligroin oder Lösungsmittelgemischen wie Methanol/H₂O aufgenommen, und die gewünschten Reaktionsprodukte werden durch Kristallisation abgetrennt. Eine andere Möglichkeit besteht darin, die nicht umgesetzten Fettsäureester zunächst weitgehend durch eine Hochvakuumdestillation zu entfernen und die Verknüpfungsprodukte anschließend aus dem Rückstand umzukristallisieren.

Ein besonderer Vorteil dieses Verfahrens der "Schwanz-Schwanz-Verknüpfung" ist es, daß das Ausgangsmaterial neben den umsetzbaren Fettsäureestern auch ohne weiteres Fettsäureester ohne funktionelle Gruppen enthalten kann, da diese nicht mit den bifunktionellen Verbindungen reagieren können und daher bei der Umsetzung nicht stören. Aus diesem Grund eignet sich dieses Verfahren auch hervorragend zur selektiven Abtrennung von funktionalisierten Fettsäuren und Fettsäurederivaten aus Fettsäuregemischen, in denen der Gehalt solcher Fettsäuren relativ gering ist.

Die erfindungsgemaß verknüpften Fettsäureester eignen sich nun ausgezeichnet als Monomere zur Herstellung von Kunststoffen. Durch Reaktion mit Diaminen, Diolen, Aminoalkoholen, Polyolen oder Polyaminen lassen sie sich zu einer Vielzahl von verschiedenen thermoplastischen und duroplastischen Polymeren umsetzen. Die Verknüpfung erfolgt hierbei über die Reaktion der Kopfgruppen, d.h. der freien Ester- oder gegebenenfalls auch der Carboxylfunktionen der verknüpften Fettsäuren mit den reaktiven Gruppen der genannten bifunktionellen Verbindungen. Bevorzugt eingesetzt werden die Methyl- oder Ethylester dieser Verbindungen, da sich die entsprechenden Alkohole als flüchtige Komponenten leicht aus dem Reaktionsgemisch entfernen lassen, wodurch das Gleichgewicht in Richtung der Verknüpfungsreaktion verschoben wird.

Von besonderem Interesse ist die vollkommen neue Kunststoffklasse der Polyamidurethane, in der die Polymere nach einem ganz neuartigen Bauprinzip zusammengesetzt sind. Zu dieser Klasse gelangt man, wenn man hydroxylgruppenhaltige Fettsäureester zunächst über Diisocyanate unter Bildung von Urethanbindungen zu den erfindungsgemäßen Monomerverbindungen umsetzt und diese anschließend mit Diaminen über die Carboxylfunktion als Amide zu langkettigen Polymeren verknüpft. Die Art der beiden Verknüpfungstypen führt hierbei zu einer besonders starken polaren Wechselwirkung der Polymerketten, ohne dabei jedoch die thermoplastischen Eigenschaften des Kunststoffs zu beeinträchtigen. Verwendet man an Stelle der Diisocyanate Säuredichloride, so gelangt man zu den ebenfalls interessanten Polyesteramiden, bei Einsatz von Diolen an Stelle von Diaminen erhält man Polyesterurethane bzw. Polyester.

Als Diamine oder Aminoalkohole eignen sich primäre und sekundäre aliphatische, cycloaliphatische, aliphatisch-aromatische und aromatische Diamine bzw. Aminoalkohole, vorzugsweise mit 2 bis 44 Kohlenstoffatomen. Hierzu gehören u.a. auch Amine aus dimeren Fettsäuren.

Zwischen den beiden Aminofunktionen der Diamine können sich in der Kohlenwasserstoffkette oder am cycloaliphatischen oder aromatischen Rest zusätzliche strukturelle Elemente bzw. weitere funktionelle Gruppen, z.B. Ethergruppen, Diamidgruppierungen, Aminogruppen, Ketogruppen oder Sulfongruppen befinden. Bevorzugt eingesetzte Diamine sind 1,2-Diaminoethan, 1,3-Diaminopropan, 1,6-Diaminohexan, 1,8-Diaminooctan, Piperazin, Diethylentriamin, 4,7,10-Trioxatridecan-1,13-diamin, 3,3'-Diaminodiphenylsulfon, 3,3'-Dimethyl-4,4'-diaminodicyclohexylmethan und handelsübliche Etherdiamine der Formel 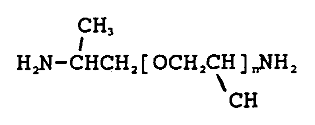
wobei n eine ganze Zahl von 1 bis ungefähr 2000 ist. Besonders bevorzugt werden 1,2-Diaminoethan und 1,6-Diaminohexan eingesetzt. Bevorzugte Aminoalkohole sind 2-Aminoethanol und 3-Aminopropanol.

Für die Umsetzung geeignete Diole sind primäre und sekundäre aliphatische, cycloaliphatische, aliphatisch-aromatische und aromatische Diole, vorzugsweise mit 2 bis 44 Kohlenstoffatomen. Bevorzugt eingesetzt werden Glycol, 1,4-Butandiol, 2-Butin-1,4-diol, 2-Buten-1,4-diol, 1,5-Pentandiol, 1,6-Hexandiol, 1,10-Decandiol, Neopentylglycol, N,N-Diethylamino-propandiol-2,3 oder Hydroxypivalinsäureneopentylglycolester. Besonders bevorzugt sind 1,4-Butandiol und 1,10-Decandiol.

Die Umsetzung der einzelnen Komponenten erfolgt nach den in der Kunststoffherstellung bekannten und dem Fachmann geläufigen Methoden. Bezogen auf die zur Reaktion zu bringenden funktionellen Gruppen werden die einzelnen Komponenten in äquimolaren Mengen eingebracht und man arbeitet in einem Temperaturbereich zwischen 20 und 180°C, vorzugsweise in der Schmelze und vorsorglich unter einer Inertgasatmosphäre, z.B. von Stickstoff.

Ein besonderer Vorteil der erfindungsgemäßen Verwendung liegt in den vielfältigen Möglichkeiten, die dieses System zur Variation der Kunststoffeigenschaften zur Verfügung stellt. Die Eigenschaften lassen sich einerseits über das Bindeglied, das die Fettsäuren über die Carboxyfunktion verknüpft, d.h. beispielsweise die Diamine oder die Diole, andererseits durch die Wahl der Fettsäure und der bifunktionellen Verbindung, mittels derer die Verknüpfung über Hydroxy- oder Aminogruppen erfolgt, also beispielsweise des Diisocyanats oder des Säuredichlorids, beeinflussen. Weiterhin können auch Mischungen unterschiedlicher Monomere zu Polymeren umgesetzt werden, wodurch zusätzlich Einfluß auf die resultierenden Kunststoffeigenschaften genommen werden kann. Ganz allgemein sind hierbei die gängigen Regeln der klassischen Polymerchemie zu berücksichtigen. So ist festzustellen, daS die Flexibilität der Kunststoffe mit wachsender Kettenlänge des Fettsäurerestes zunimmt und gleiches gilt auch für die Länge der verschiedenen bifunktionellen Verbindungen, die die verknüpfenden Elemente bilden. Da die aus den nativen Fetten und Ölen erhältlichen Monofettsäureester, die in der Regel das Hauptausgangsmaterial für die Herstellung der erfindungsgemäßen Monomeren darstellen dürften, ihre funktionellen Gruppen im allgemeinen etwa in der Mitte der Fettsäurekette tragen, so z.B. die Ricinolsäure die Hydroxylgruppe an C₁₂, enthalten die verknüpften Polymerketten auch immer mehr oder weniger langkettige aliphatische Reste. Derartige aliphatische Restgruppen in Polymeren vermitteln dem Kunststoff einerseits hydrophobe Eigenschaften und haben außerdem die Wirkung von inneren Weichmachern. Ihre Anwesenheit kann daher für die Erzeugung flexibler Kunststoffe von besonderem Vorteil sein. Umgekehrt können jedoch die polaren Bindungstypen, die in diesen Kunststoffsystemen auftreten können, dieser Weichmacherwirkung über Wasserstoffbrückenbindungen oder Allophanatbildung entgegenwirken, oder dieser möglicherweise unerwünschte Einfluß der Seitenketten kann über die geeignete Wahl der verknüpfenden bifunktionellen Elemente kompensiert werden.

Die Polarität der Bindungen macht die auf diese Weise erzeugten Kunststoffe wegen der damit einhergehenden günstigen Haftungseigenschaften besonders geeignet als Glasfaserverbundstoff, wobei die niedrige Verarbeitungstemperatur einen weiteren Vorteil dieses Systems darstellt.

Die beschriebenen Variationsmöglichkeiten erlauben es somit ganz allgemein, Kunststoffe herzustellen, die den jeweiligen Bedürfnissen exakt angepaßt sind. So lassen sich auf diese Weise Kunststoffe erhalten, die sowohl thermoplastisch verarbeitbar, im Spritzgußverfahren verwendbar oder zur Extrusion zu Folien geeignet sind. Auch andere Eigenschaften wie Reißfestigkeit, Reckfähigkeit, Kerbschlag-Zähigkeit, Glaspunkt, und Kristallinität lassen sich in weiten Grenzen variieren. Ebensogut lassen sich über die erfindungsgemäßen Monomerbausteine aber auch duroplastische Kunststoffe erzeugen.

Ein weiterer Vorteil der vorliegenden Erfindung ist es, daß es sich bereits bei den als Ausgangsmonomeren eingesetzten Verbindungen verglichen mit den sonst üblicherweise bei der Kunststoffherstellung verwendeten Polymeren um relativ große Moleküle handelt, so daß bei der weiteren Umsetzung mit bifunktionellen reaktiven Verbindungen bereits vergleichsweise wenig Verknüpfungsreaktionen ausreichen, um zu linearen Polymeren ausreichender Länge zu gelangen. Hinzu kommt, daß sich erfindungsgemäß selbst bei Einsatz von Gemischen, die nicht ausschließlich aus Fettsäureestern mit funktionalisierten Fettsäureresten bestehen, immer nur Verknüpfungsprodukte mit zwei weiteren funktionellen Gruppen entstehen können, so daß bei der Polymerbildung kein Kettenabbruch erfolgen kann.

Erfindungsgemäß kann die Umsetzung der Hydroxyfettsäureester mit bifunktionellen Verbindungen auch in einfacher und kostengünstiger Weise zur Reindarstellung der Hydroxyfettsäuren ausgenutzt werden, indem man aus den verknüpften Fettsäureestern in bekannter Weise die bifunktionelle Gruppe und die Alkoholkomponente des Esters abspaltet und dadurch die Fettsäuren freisetzt. Diese Fettsäuren stellen nicht nur selbst wertvolle Zusätze für viele technische Produkte dar, sondern lassen sich auch durch weitere Reaktionen, z.B. durch die Oxidation der OH-Gruppe zu zahlreichen interessanten Derivaten umsetzen. Auch die reinen Hydroxyfettsäuren können als Ausgangsmaterial zur Herstellung von Kunststoffen dienen, wobei diese grundsätzlich anders als die bei direkter Verwendung der erfindungsgemäßen Monomere erhaltenen Kunststoffe aufgebaut sind. So entstehen bei der Umsetzung der freien Säuren, beispielsweise der 12-Hydroxystearinsäure, mit Diisocyanaten Polyurethanschäume.

Wie bereits ausgeführt, sind bei direkter Vernetzung von Triglyceriden, die Hydroxyfettsäuren enthalten, lediglich Duroplaste zu erhalten. Durch die vorliegende Erfindung werden die Fettsäuren nunmehr in einer Form zur Verfügung gestellt, die die Herstellung einer Vielzahl polymerer Kunststoffprodukte mit unterschiedlichsten Eigenschaften erlaubt. Da es sich bei den vorliegenden Kunststoffen außerdem um Polymere handelt, deren Ausgangsmaterialien zumindest teilweise aus biologischen Quellen gewonnen werden können, ist damit zu rechnen, daß diese Produkte auch leichter abbaubar und somit auf lange Sicht unter dem Gesichtspunkt der Umweltverträglichkeit weitaus positiver zu bewerten sind als die Mehrzahl der bisher bekannten herkömmlichen Kunststoffe. Die Erfindung ermöglicht es ferner, auf einfache Weise die für die industrielle Nutzung bedeutsamen Hydroxyfettsäuren, insbesondere die Ricinolsäure, selbst in hochgereinigter Form noch kostengünstig zur Verfügung zu stellen.

## Patentansprüche

1. Verfahren zur Herstellung linear aufgebauter polymerer Kunststoffe,
**dadurch gekennzeichnet,**
daß man Monomere, die dadurch erhältlich sind, daß man Ester hydroxylgruppenhaltiger oder Ester oder Salze aminogruppenhaltiger Fettsäuren, die entweder als solche oder als Gemische von Estern bzw. Salzen verschiedener solcher Fettsäuren gegebenenfalls im Gemisch mit Fettsäureestern ohne funktionelle Gruppen vorliegen, mit geeigneten, zur Reaktion mit Hydroxyl- oder Aminogruppen befähigten bifunktionellen Verbindungen, die entweder als solche oder als Gemische vorliegen können, gegebenenfalls unter Zusatz von Katalysatoren und in einem geeigneten Lösungsmittel, derart zur Reaktion bringt, daß jeweils zwei Moleküle solcher Fettsäureester, deren Fettsäurereste gleich oder verschieden sein können, mittels der bifunktionellen Verbindung über die Hydroxyl- oder Aminogruppen miteinander verknüpft werden, und das Verknüpfungsprodukt gegebenenfalls von den Fettsäureestern ohne funktionelle Gruppen abtrennt, in an sich bekannter Weise über die Carbonylfunktion der Fettsäurereste mit geeigneten bifunktionellen Verbindungen verknüpft.

2. Verfahren nach Anspruch 1,
**dadurch gekennzeichnet,**
daß als für die Verknüpfung über die Carbonylfunktion geeignete bifunktionelle Verbindungen Diamine, Polyamine, Aminoalkohole, Diole oder Polyole eingesetzt werden.

3. Verfahren nach Anspruch 2,
**dadurch gekennzeichnet,**
daß als für die Verknüpfung über die Carbonylfunktion geeignete bifunktionelle Verbindungen 1,2-Diaminoethan, 1,6-Diaminohexan, Aminoethanol, 1,4-Butandiol oder 1,10-Decandiol eingesetzt werden.

4. Zur Erzeugung linear aufgebauter, polymerer Kunststoffe geeignete Monomere, dadurch erhältlich, daß man Ester hydroxylgruppenhaltiger oder Ester oder Salze aminogruppenhaltiger Fettsäuren, die entweder als solche oder als Gemische von Estern bzw. Salzen verschiedener solcher Fettsäuren gegebenenfalls im Gemisch mit Fettsäureestern ohne funktionelle Gruppen vorliegen, mit geeigneten, zur Reaktion mit Hydroxyl- oder Aminogruppen befähigten bifunktionellen Verbindungen, die entweder als solche oder als Gemische vorliegen können, gegebenenfalls unter Zusatz von Katalysatoren und in einem geeigneten Lösungsmittel, derart zur Reaktion bringt, daß jeweils zwei Moleküle solcher Fettsäureester, deren Fettsäurereste gleich oder verschieden sein können, mittels der bifunktionellen Verbindung über die Hydroxyl- oder Aminogruppen miteinander verknüpft werden, und gegebenfalls das Verknüpfungsprodukt von den Fettsäureestern ohne funktionelle Gruppen abtrennt.

5. Monomere nach Anspruch 4, dadurch erhältlich, daß als Ester der hydroxyl- oder aminogruppenhaltigen Fettsäuren Methyl- oder Ethylester eingesetzt werden.

6. Monomere nach Anspruch 4 oder 5, dadurch erhältlich, daß als Ester hydroxylgruppenhaltiger Fettsäuren Ricinolsäure oder 12-Hydroxystearinsäure eingesetzt werden.

7. Monomere nach einem der Ansprüche 4 bis 6, dadurch erhältlich, daß als bifunktionelle Verbindungen Diisocyanate oder aktivierte Dicarbonsäurederivate eingesetzt werden.

8. Monomere nach einem der Ansprüche 4 bis 7, dadurch erhältlich, daß als bifunktionelle Verbindungen Methylendiphenylendiisocyanat, Desmodur® T80, Hexamethylendiisocyanat, Phthalsäuredichlorid, Adipinsäuredichlorid, Maleinsäuredichlorid oder Phosgen eingesetzt werden.

9. Verwendung der Monomere nach einem der Ansprüche 4 bis 8 zur Reindarstellung von Hydroxy- oder Aminofettsäuren,
**dadurch gekennzeichnet,**
daß man aus den verknüpften monomeren Fettsäureestern die bifunktionelle Gruppe und die Alkoholkomponente des Esters in an sich bekannter Weise abspaltet und dadurch die freien Hydroxy- bzw. Aminofettsäuren gewinnt.

10. Verwendung nach Anspruch 9,
**dadurch gekennzeichnet,**
daß die in den Monomeren verknüpften Hydroxyfettsäuren Ricinolsäure oder 12-Hydroxystearinsäure sind.

## Claims

1. A process for the production of linear polymer plastics,
characterized by
linking monomers obtainable by reacting esters of hydroxyl-group-containing fatty acids or esters or salts of amino-group-containing fatty acids either separately or as mixtures of esters or salts respectively of different of such fatty acids, optionally admixed with fatty acid esters having no functional groups, with suitable bifunctional compounds which are capable of reacting with hydroxyl or amino groups either separately or as mixtures, optionally in admixture with catalysts and in a suitable solvent, said reaction being such that two molecules of the fatty acid esters or salts, the fatty acid residues of which may be identical or different, are always linked with each other by means of said bifuncional compound via the hydroxyl groups or the amino groups, and optionally separating the linkage product from the fatty acid esters having no functional groups, in a manner known per se via the carbonyl function of the fatty acid residues with suitable bifunctional compounds.

2. A process according to claim 1,
characterized by
selecting diamines, polyamines, amino alcohols, diols or polyols as bifunctional compounds suitable for a linkage via the carbonyl function.

3. A process according to claim 2,
characterized by
selecting 1,2-diaminoethane, 1,6-diaminohexane, amino ethanol, 1,4-butanediol or 1,10-decanediol as bifunctional compounds suitable for a linkage via the carbonyl function.

4. Monomers suitable for the production of linear polymer plastics, said monomers obtainable by reacting esters of hydroxyl-group-containing fatty acids or esters or salts of amino-group-containing fatty acids either separately or as mixtures of esters or salts respectively of different of such fatty acids, optionally admixed with fatty acid esters having no functional groups, with suitable bifunctional compounds which are capable of reacting with hydroxyl or amino groups either separately or as mixtures, optionally in admixture with catalysts and in a suitable solvent, said reaction being such that two molecules of the fatty acid esters or salts, the fatty acid residues of which may be identical or different, are always linked with each other by means of said bifunctional compound via the hydroxyl groups or the amino groups, and optionally separating the linkage product from the fatty acid esters having no functional groups.

5. Monomers according to claim 4 obtainable by selecting methyl or ethyl esters as esters of the hydroxyl- or amino-group-containing fatty acids.

6. Monomers according to claim 4 or 5, obtainable by selecting ricinoleic acid or 12-hydroxystearic acid as esters of hydroxylgroup-containing fatty acids.

7. Monomers according to any one of claims 4 to 6, obtainable by selecting diisocyanates or activated dicarboxylic acid derivatives as bifunctional compounds,

8. Monomers according to any one of claims 4 to 7, obtainable by selecting methylene-bis-phenylene diisocyanate, Desmodur®T 80, hexamethylene diisocyanate, phthalic acid dichloride, adipic acid dichloride, maleic acid dichloride or phosgene.

9. The use of the monomers according to any one of claims 4 to 8 for the production of hydroxyl- or amino-group-containing fatty acids in pure form,
characterized by
cleaving off in a manner knwon per se the bifunctional group and the alcohol component of the ester from the linked monomeric fatty acid esters, thereby obtaining the free hydroxyl- or amino-group-containing fatty acids.

10. The use according to claim 9,
characterized in
that the hydroxy fatty acids linked in the monomers are ricinoleic acid or 12-hydroxystearic acids.

## Revendications

1. Procédé de fabrication de matières plastiques polymères linéaires,
**caractérisé par le fait**
que des monomères, qui peuvent être obtenus, en faisant réagir des esters d'acides gras contenant des groupes hydroxyles ou des esters ou des sels d'acides gras contenant des groupes amino qui existent soit en tant que tels soit en tant que mélanges d'esters ou de sels de différents acides gras de ce type, éventuellement mélangés avec des esters d'acides gras sans groupes fonctionnels, avec des composés bifonctionnels appropriés, qui sont aptes à réagir avec des groupes hydroxyles ou amino et peuvent exister soit en tant que tels soit en tant que mélanges, éventuellement en ajoutant des catalyseurs et dans un solvant approprié, de sorte que deux molécules d'esters d'acides gras de ce type, dont les résidus d'acides gras peuvent être identiques ou différents, sont liées entre elles au moyen du composé bifonctionnel par l'intermédiaire des groupes hydroxyles ou amino, et que le produit de liaison est éventuellement séparé des esters d'acides gras sans groupes fonctionnels, sont liés de manière connue par l'intermédiaire de la fonction carbonyle des résidus d'acides gras, avec des composés bifonctionnels appropriés.

2. Procédé selon la revendication 1,
**caractérisé par le fait**
que l'on utilise comme composés bifonctionnels appropriés pour la liaison par l'intermédiaire de la fonction carbonyle, des diamines, des polyamines, des amino-alcools, des diols ou des polyols.

3. Procédé selon la revendication 2,
**caractérisé par le fait**
que l'on utilise comme composés bifonctionnels appropriés pour la liaison par l'intermédiaire de la fonction carbonyle, du 1,2-diaminoéthane, du 1,6-diaminohéxane, de l'aminoéthanol, du 1,4-butanediol ou du 1,10-décanediol.

4. Monomères appropriés pour produire des matières plastiques polymères linéaires, pouvant être obtenus, en faisant réagir des esters d'acides gras contenant des groupes hydroxyles ou des esters ou des sels d'acides gras contenant des groupes amino, qui existent soit en tant que tels soit en tant que mélanges d'esters ou de sels de différents acides gras de ce type, éventuellement mélangés avec des esters d'acides gras sans groupes fonctionnels, avec des composés bifonctionnels appropriés, qui sont aptes à réagir avec des groupes hydroxyles ou amino, et peuvent exister soit en tant que tels soit en tant que mélanges, éventuellement en ajoutant des catalyseurs et dans un solvant approprié, de sorte que deux molécules d'esters d'acides gras de ce type, dont les résidus d'acides gras peuvent être identiques ou différents, sont liées entre elles au moyen du composé bifonctionnel par l'intermédiaire des groupes hydroxyles ou amino, et que le produit de liaison est éventuellement séparé des esters d'acides gras sans groupes fonctionnels.

5. Monomères selon la revendication 4, pouvant être obtenus par le fait que l'on utilise comme esters des acides gras contenant des groupes hydroxyles ou amino, des esters méthyliques ou des esters éthyliques.

6. Monomères selon la revendication 4 ou 5, pouvant être obtenus par le fait que l'on utilise comme esters d'acides gras contenant des groupes hydroxyles, de l'acide ricinolique ou de l'acide 12-hydroxystéarique.

7. Monomères selon l'une des revendications 4 à 6, pouvant être obtenus par le fait que l'on utilise comme composés bifonctionnels, des diisocyanates ou des dérivés activés d'acides dicarboxyliques.

8. Monomères selon l'une des revendications 4 à 7, pouvant être obtenus par le fait que l'on utilise comme composés bifonctionnels, du méthylènediphénylènediisocyanate, du Desdomur ® T80, de l'héxaméthylènediisocyanate, du dichlorure de phtalyle, du dichlorure d'adipyle, du dichlorure de maléyle ou du phosgène.

9. Utilisation des monomères selon l'une des revendications 4 à 8 pour la préparation à l'état pur d'hydroxy- ou d'amino-acides gras.
**caractérisée par le fait**
que l'on sépare d'une manière connue des esters d'acides gras monomères liés, le groupe bifonctionnel et les composants alcooliques de l'ester et que l'on obtient ainsi les hydroxy- ou amino- acides gras libres.

10. Utilisation selon la revendication 9,
**caractérisée par le fait**
que les hydroxy-acides gras liés dans les monomères sont l'acide ricinolique ou l'acide 12-hydroxystéarique.
